# EUROPÄISCHE PATENTSCHRIFT

(11) **EP 3 642 140 B1**
(45) Veröffentlichungstag und Bekanntmachung des Hinweises auf die Patenterteilung: **11.09.2024**
(21) Anmeldenummer: 18733841.3
(22) Anmeldetag: 20.06.2018
(51) Int. Cl.: B65G 35/06

(54) **TRANSPORTVORRICHTUNG MIT AN EINER SCHIENE VERFAHRBAR GEFÜHRTEN SCHLITTEN**
TRANSPORT DEVICE COMPRISING CARRIAGES GUIDED SUCH THAT THEY CAN MOVE ON A RAIL
DISPOSITIF DE TRANSPORT AVEC CHARIOTS DÉPLAÇABLES SUR UN RAIL

(30) Priorität: 11.08.2017 DE 102017118357
(43) Veröffentlichungstag der Anmeldung: 29.04.2020
(73) Patentinhaber: Weiss GmbH, 74722 Buchen (Odw.) (DE)
(72) Erfinder: GÖTZINGER, Martin, 74722 Buchen (DE); NEUWEILER, Lutz, 68535 Edingen-Neckarhausen (DE)
(74) Vertreter: Manitz Finsterwald Patent- und Rechtsanwaltspartnerschaft mbB
(86) Internationale Anmeldenummer: PCT/EP2018/066496
(87) Internationale Veröffentlichungsnummer: WO 2019/029884

(56) Entgegenhaltungen:
- EP-A1- 0 316 990
- EP-A1- 0 340 639
- EP-A1- 0 792 823
- EP-A1- 0 909 728
- EP-A1- 2 418 161
- EP-A2- 2 873 633
- US-A- 4 793 261

## Beschreibung

Die vorliegende Erfindung betrifft eine Transportvorrichtung zum Transportieren von Objekten entlang einer Transportbahn. Insbesondere betrifft die Erfindung eine Transportvorrichtung gemäß dem Oberbegriff des Anspruchs 1, wie sie der Art nach im Wesentlichen aus der EP 2 873 633 A2 hervorgeht.

Bezüglich des weitergehenden Standes der Technik sei an dieser Stelle auf die Druckschriften EP 0 340 639 A1, EP 792 823 A1, EP 0 909 728 A1, EP 2 418 161 A1 und US 4 793 261 A verwiesen.

EP 0 792 823 A1 offenbart eine Transportvorrichtung zum Transportieren von Objekten entlang einer Transportbahn (siehe Figur 6), umfassend:
- Schienen, welche die Transportbahn definiert;
- einen Transportwagen, der an der Schienen verfahrbar geführt ist und zur Aufnahme wenigstens eines zu transportierenden Objekts ausgebildet ist;
- ein an dem Transportwagen vorgesehenes Kopplungselement, über das der Transportwagen antreibbar ist;
- zumindest eine erste Antriebseinheit mit einem ersten Antriebsmittel zum Antrieb des Transportwagens entlang eines ersten Transportabschnitts der Transportbahn; und
- eine zweite Antriebseinheit mit einem zweiten Antriebsmittel zum Antrieb des Transportwagens entlang eines zweiten Transportabschnitts der Transportbahn;

wobei das Kopplungselement ausgebildet ist, um im Bereich des ersten Transportabschnitts kraftschlüssig mit dem ersten Antriebsmittel in Eingriff zu stehen;
wobei das Kopplungselement ferner ausgebildet ist, um im Bereich des zweiten Transportabschnitts formschlüssig mit dem zweiten Antriebsmittel in Eingriff zu stehen; und
wobei das Kopplungselement mittels einer ersten Feder und mittels einer zweiten Feder an dem Transportwagen abgestützt ist, wobei die erste Feder der zweiten Feder in einer ersten Transportrichtung des Transportwagens vorgelagert ist.

Derartige Transportvorrichtungen, die gelegentlich auch als Lineartransportsystem bezeichnet werden, dienen beispielsweise in der Montage- und Automatisierungstechnik dazu, Werkstücke positionsgenau zu Bearbeitungs- und/oder Montage-Stationen zu transportieren, die entlang der Transportbahn positioniert sind. Die zu transportierenden Objekte bzw. Werkstücke können hierbei auf Schlitten positioniert werden, die durch die Schiene geführt sind und die somit entlang derselben verfahren werden können.

Zum Verfahren der Schlitten sind üblicherweise ein oder mehrere Antriebseinheiten wie beispielsweise Linearantriebe, Bandantriebe und/oder sogenannte Kurventrommeln entlang der Transportahn vorgesehen. Ein Schlitten, der gelegentlich auch als Werkstückträger bezeichnet wird, kann dabei mittels einer Kurventrommel im Bereich der jeweiligen Montage-Station positionsgenau an ein gewünschte Stelle transportiert werden, wohingegen der Transport der Schlitten zwischen zwei Montage-Stationen beispielsweise mit Hilfe eines Bandantriebs erfolgen kann. Der Antrieb der Schlitten mittels solch eines Bandantriebs kann dabei über ein an dem jeweiligen Schlitten vorgesehenes Kopplungselement erfolgen, das kraftschlüssig mit dem Band bzw. dem Riemen des Bandantriebs in Eingriff gelangt, so dass der jeweilige Schlitten aufgrund des Kraft- bzw. Reibschlusses zwischen Band und Kopplungselement von dem Bandantrieb entlang der Schiene bzw. der Transportbahn angetrieben wird.

Ist die Schiene im Bereich eines Transportabschnitts der Transportbahn gekrümmt, insbesondere kreisbogenförmig gekrümmt, so kann der Antrieb der Schlitten im Bereich solch eines gekrümmten Transportabschnitts der Transportbahn beispielweise mittels einer sich drehenden Kreisscheibe erfolgen, mittels derer der Schlitten im Bereich der gekrümmten Transportbahn - hier auch als Eckumlenkung bezeichnet - über Reibschluss mitgenommen und somit angetrieben wird.

Weist eine solche Transportvorrichtung jedoch beispielsweise zwei vertikal übereinander angeordnete lineare Transportabschnitte auf, die über solch eine Eckumlenkung miteinander verbunden sind, so kann unter Umständen der Reibschluss zwischen der angetriebenen Kreisscheibe und dem Schlitten im Bereich der Eckumlenkung nicht ausreichen, um den Schlitten schlupffrei in vertikaler Richtung über die Eckumlenkung von dem einen linearen Transportabschnitt zu dem anderen linearen Transportabschnitt zu transportieren.

Darüber hinaus kann es wünschenswert sein, auch im Bereich einer derartigen Eckumlenkung zumindest eine Montage-Station vorsehen zu können, weshalb sich mittels der Antriebseinheit im Bereich der Eckumlenkung eine positionsgenaue Werkstückpositionierung erzielen lassen sollte.

Der Erfindung liegt daher die Aufgabe zugrunde, eine gattungsgemäße Transportvorrichtung dahingehend weiterzuentwickeln, dass dem zuvor beschriebenen Bedarf entsprochen werden kann.

Diese Aufgabe wird mit einer Transportvorrichtung mit den Merkmalen des Anspruchs 1, wobei das Kopplungselement ausgebildet ist, um im Bereich des zweiten Transportabschnitts formschlüssig bzw. über Formschluss oder form- und kraftschlüssig, also über kombinierten Kraft- und Formschluss, mit dem zweiten Antriebsmittel in Eingriff zu gelangen.

Anders als im Bereich des ersten Transportabschnitts der Transportbahn wird also der Schlitten im Bereich des zweiten Transportabschnitts, im Bereich dessen die Schiene bzw. die Transportbahn zur Realisierung einer Eckumlenkung kreisbogenförmig gekrümmt sein kann, nicht etwa über reinen Kraft- bzw. über Reibschluss, sondern über Formschluss oder kombinierten Kraft-Formschluss angetrieben.

Dadurch, dass der Schlitten über das Kopplungselement mittels Formschluss von dem zweiten Antriebsmittel angetrieben wird, ist eine schlupffreie Kraftübertragung zwischen dem Antriebsmittel der zweiten Antriebseinheit und dem Kopplungselement möglich, so dass im Bereich des zweiten Transportabschnitts auch eine vertikal ausgerichtete Eckumlenkung realisiert werden kann, die zwei in einer Vertikalebene übereinander angeordnete Transportabschnitte miteinander verbindet - einen linearen Transportabschnitt im Vorlauf zu der Eckumlenkung und einen linearen Transportabschnitt im Rücklauf von der Eckumlenkung.

Darüber hinaus lässt sich aufgrund der Tatsache, dass das Kopplungselement im Bereich des zweiten Transportabschnitts formschlüssig mit dem zweiten Antriebsmittel in Eingriff gelangt, die Relativposition zwischen dem Schlitten und dem zweiten Antriebsmittel genau bestimmen, so dass sich mittels der zweiten Antriebseinheit in der gewünschten Weise auch eine exakte Positionierung des Schlittens im Bereich des zweiten Transportabschnitts realisieren lässt, wie dies im Rahmen eines Taktbetriebs wünschenswert sein kann, im Rahmen dessen es eine im Bereich des zweiten Transportabschnitts befindliche Montage-Station exakt mit einem Schlitten anzufahren gilt.

Erfindungsgemäß ist das Kopplungselement federnd an dem Schlitten abgestützt, wobei insbesondere das Kopplungselement senkrecht zu seiner Eingriffsfläche vorgespannt ist. Aufgrund der Federvorspannung wird das Kopplungselement somit zuverlässig gegen das jeweilige Antriebsmittel gedrückt, so dass insbesondere auch im Bereich des ersten Transportabschnitts, in dem das Kopplungselement kraftschlüssig mit dem ersten Antriebsmittel in Eingriff gelangt, ein unerwünschter Schlupf zwischen Antriebsmittel und Kopplungselement vermieden werden kann.

Damit die zumindest eine zweite Feder keine Wirkung entfaltet, solange das Kopplungselement mit dem ersten Antriebsmittel in Eingriff steht, weist das Kopplungselement gegenüber der zumindest einen zweiten Feder einen Totgang auf derart, dass beim Einfedern der ersten Feder die zumindest eine zweite Feder bis zur Überwindung des Totgangs keine Wirkung entfaltet.

Damit die zweite Feder im Bereich des zweiten Antriebsmittels in der gewünschten Weise ansprechen kann, sollte dabei der Abstand der Eingriffsoberfläche des ersten Antriebsmittels von dem Schlitten etwas größer sein, als der Abstand der Eingriffsoberfläche des zweiten Antriebsmittels von dem Schlitten. Hierdurch kann sichergestellt werden, dass der Federhub, den das Kopplungselement im Bereich des zweiten Antriebsmittels erfährt, etwas größer ist, als der Federhub im Bereich des ersten Antriebsmittels, wodurch in der gewünschten Weise die zumindest eine zweite Feder aufgrund des größeren Federhubs im Bereich des zweiten Antriebsmittels nur dort eine Wirkung entfaltet.

Im Folgenden wird nun auf bevorzugte Ausführungsformen der Erfindung eingegangen, wobei sich weitere Ausführungsformen auch aus den abhängigen Ansprüchen, der Figurenbeschreibung sowie den Figuren selbst ergeben können.

So kann die erste Antriebseinheit beispielsweise als ein Bandantrieb mit einem umlaufenden Band bzw. Gurt als erstem Antriebsmittel ausgebildet sein. Alternativ hierzu könnte als erste Antriebseinheit beispielsweise auch ein Kettenantrieb mit einer umlaufenden Kette als erstem Antriebsmittel zum Einsatz kommen, wobei auf der Kette mehrere Reibschuhe für den Reibschlusseingriff mit dem Kopplungselement des Schlittens vorgesehen sind.

Demgegenüber kann die zweite Antriebseinheit gemäß einer Ausführungsform als Zahnantrieb mit einem umlaufenden Zahnriemen oder einem Zahnrad als zweitem Antriebsmittel ausgebildet sein. Der Zahnriemen ist dabei so orientiert, dass dessen Verzahnung außen liegt, um mit dem Kopplungselement formschlüssig in Eingriff gelangen zu können, so dass ein Schlupf zwischen dem Kopplungselement und dem zweiten Antriebsmittel weitestgehend ausgeschlossen werden kann.

Dadurch, dass das zweite Antriebsmittel als umlaufender Zahnriemen oder als Zahnrad ausgebildet ist, kann mittels der zweiten Antriebseinheit der Schlitten in der gewünschten Weise im Bereich eines als Eckumlenkung ausgebildeten zweiten Transportabschnitts angetrieben werden. Hierzu weist die Schiene gemäß einer Ausführungsform im Bereich des zweiten Transportabschnitts der Transportbahn eine gekrümmte Gestalt auf, und zwar insbesondere eine kreisbogenförmig gekrümmte Gestalt, wobei das zweite Antriebsmittel und insbesondere dessen Eingriffsoberfläche in Form der Verzahnung des Zahnriemens bzw. des Zahnrads der Schiene in einem gewissen äquidistanten Abstand folgt.

Handelt es sich also beispielsweise bei dem zweiten Antriebsmittel um ein Zahnrad, so lässt sich damit eine Eckumlenkung über einen kreisförmig gekrümmten zweiten Transportabschnitt realisieren, wobei die Eckumlenkung vorzugsweise über 180° oder 90° erfolgen kann, wobei jedoch auch andere Eckumlenkwinkel im Winkelbereich zwischen 40° und 220° realisiert werden können. Beträgt der Eckumlenkwinkel beispielsweise 180°, so bedeutet dies, dass über das Zahnrad zwei vertikal übereinander oder horizontal nebeneinander verlaufende lineare Transportabschnitte antriebswirksam miteinander verbunden werden können, wobei im Bereich der Eckumlenkung die Schiene über einen Winkel von 180° kreisbogenförmig gekrümmt ist, um die Schienenabschnitte der beiden lineare Transportabschnitte miteinander zu verbinden.

Beträgt der Eckumlenkwinkel hingegen beispielsweise 90°, so können über das Zahnrad der zweiten Antriebseinheit zwei senkrecht zueinander verlaufende lineare Transportabschnitte miteinander verbunden werden, von denen zumindest einer bei Bedarf auch vertikal ausgerichtet sein kann. Hierbei ist im Bereich der Eckumlenkung die Schiene über einen Winkel von 90° kreisbogenförmig gekrümmt, um in der gewünschten Weise die Schienenabschnitte der beiden senkrecht zueinander verlaufenden Transportabschnitte miteinander verbinden zu können.

In entsprechender Weise lassen sich auch andere Eckumlenkwinkel zwischen 40° und 220° realisieren, wozu die Schiene über einen entsprechenden Winkel hinweg eine kreisbogenförmig gekrümmte Gestalt aufweist.

Ist das zweite Antriebsmittel als Zahnriemen ausgebildet, so kann dieser gemäß einer weiteren Ausführungsform im Bereich des als Eckumlenkung ausgebildeten zweiten Transportabschnitts der Transportbahn eine Umlenkung durch eine Kreisscheibe erfahren. Der Zahnriemen verläuft somit im Bereich des zweiten Transportabschnitts entlang einer Kreisbahn, so dass sich auch mit einem Zahnriemen ein Eckumlenkwinkel im Bereich zwischen 40° und 220° und insbesondere ein Eckumlenkwinkel von beispielsweise 90° oder 180° realisieren lässt.

Gemäß noch einer weiteren Ausführungsform können das erste Antriebsmittel und das zweite Antriebsmittel so ausgerichtet sein, dass der Eingriff mit dem Kopplungselement jeweils von derselben Seite desselben erfolgt. Hierzu kann vorzugsweise das Kopplungselement, eine Eingriffsfläche, insbesondere eine einzige Eingriffsfläche, für den Eingriff mit dem ersten und dem zweiten Antriebsmittel ausbilden. Betrachtet man also beispielsweise eine Transportvorrichtung mit einer in sich geschlossenen bzw. umlaufenden Transportbahn in einer horizontalen Ebene, so kann die Eingriffsfläche des Kopplungselements beispielsweise vertikal ausgerichtet sein, was bedeutet, dass die beiden Antriebsmittel der Antriebseinheiten von der Seite bzw. seitlich mit dem Kopplungselement in Eingriff gelangen. Handelt es sich also beispielsweise bei der ersten Antriebseinheit um einen Bandantrieb mit einem umlaufenden Band als erstem Antriebsmittel, so läuft auch das Band in einer horizontalen Ebene um.

Da das zweite Antriebsmittel in dieselbe Eingriffsfläche des Kopplungselements eingreift wie das erste Antriebsmittel, erstreckt sich somit auch das zweite Antriebsmittel in einer horizontalen Ebene. Handelt es sich also bei dem zweiten Antriebsmittel um einen Zahnriemen oder um ein Zahnrad, so bedeutet dies, dass der Zahnriemen bzw. das Zahnrad in einer Ebene umläuft, die parallel zu jener Ebene ist, in der sich die Transportbahn erstreckt.

Gemäß einer weiteren Ausführungsform kann die Eingriffsfläche des Kopplungselements ein Zahnwellenprofil ausbilden, insbesondere ein Zahnwellenprofil des Typs AT5 oder ein ähnliches Profil, wobei das zweite Antriebsmittel für den Eingriff mit dem Kopplungselement ein zu dem Zahnwellenprofil des Kopplungselements komplementär ausgebildetes Zahnwellenprofil ausbildet. Da derartige Zahnwellenprofile bereichsweise abgerundete Zahnflanken aufweisen, kann es zwischen dem Kopplungselement und dem zweiten Antriebsmittel zu einem kombinierten Kraft-Formschluss kommen.

Gemäß einer weiteren Ausführungsform können insbesondere zwei erste Federn vorgesehen sein, von denen eine zumindest einer zweiten Feder in einer ersten Transportrichtung vor- und die andere der zumindest einen zweiten Feder in der ersten Fahrtrichtung nachgelagert ist. Mit anderen Worten befindet sich also die zumindest eine zweite Feder zwischen den beiden ersten Federn, so dass die einzelnen Federn nacheinander ansprechen, wenn der Schlitten bzw. dessen Kopplungselement beispielsweise von der ersten Antriebseinheit an die zweite Antriebseinheit übergeben wird. Das Kopplungselement kann somit bei der Übergabe an die zweite Antriebseinheit sanft einfedern, bevor die zumindest eine zweite Feder anspricht.

Gemäß noch einer weiteren Ausführungsform kann die zumindest eine zweite Feder steifer ausgebildet sein als die zumindest eine erste Feder. So kann es für den Kraftschluss zwischen dem Kopplungselement und einem Bandantrieb im Bereich des ersten Transportabschnitts ausreichend sein, wenn das Kopplungselement mittels der ersten Federn nur relativ sanft gegen das Band des Bandantriebs gedrückt wird, um so die erforderliche Reibschlusskraft zur Mitnahme des Schlittens bzw. des Kopplungselements hervorrufen zu können. Im Bereich des zweiten Transportabschnitts kann es hingegen wünschenswert sein, das Kopplungselement mit einer größeren Kraft gegen das beispielsweise als Zahnrad ausgebildete zweite Antriebsmittel zu pressen, um so insbesondere dann einen Schlupf zwischen dem Kopplungselement und dem Zahnrad verhindern zu können, wenn eine Eckumlenkung in der Vertikalen realisiert werden soll. Dementsprechend kann die zweite Feder eine größere Federkonstante aufweisen als die zumindest eine erste Feder, so dass sich mittels der zweiten Feder im Bereich der Eckumlenkung eine größere Anpresskraft gegen das zweite Antriebsmittel erzeugen lässt.

Im Folgenden wird nun unter Bezugnahme auf die beigefügten Figuren die Erfindung rein beispielhaft erläutert, wobei:
- Fig. 1: eine perspektivische Darstellung einer erfindungsgemäßen Transportvorrichtung zeigt;
- Fig. 2 und 3: eine Draufsicht auf eine erfindungsgemäße Transportvorrichtung in einem Eckumlenkbereich gemäß einer ersten Ausführungsform zeigen;
- Fig. 4: eine Draufsicht auf eine erfindungsgemäße Transportvorrichtung in einem Eckumlenkbereich gemäß einer zweiten Ausführungsform zeigt; und
- Fig. 5: eine teilweise geschnittene Draufsicht auf den Schlitten einer erfindungsgemäßen Transportvorrichtung zeigt.

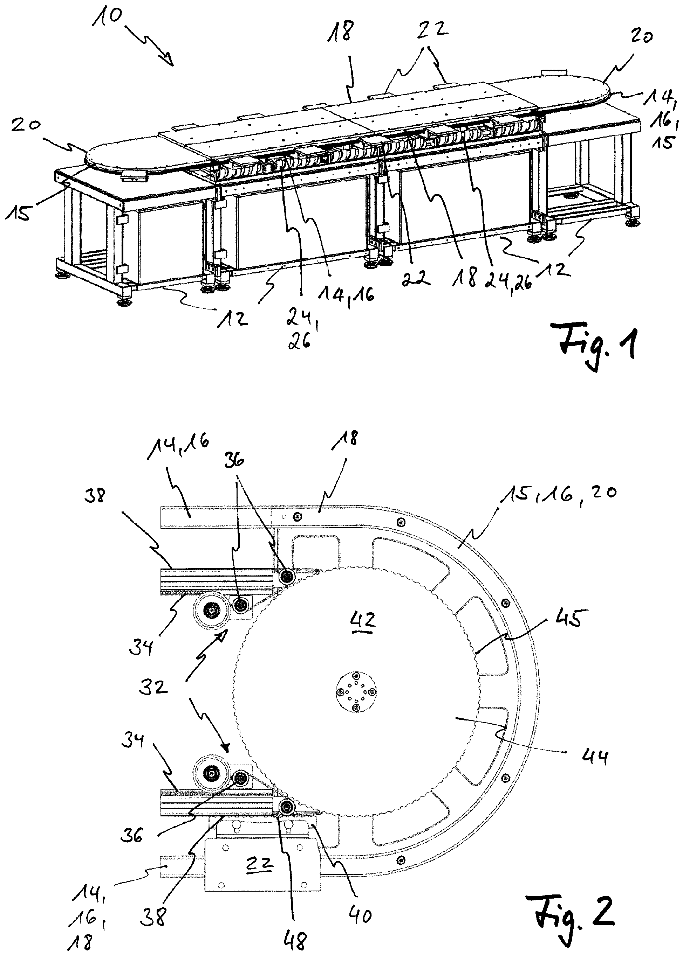

Die Fig. 1 zeigt eine erfindungsgemäße Transportvorrichtung 10 in perspektivischer Darstellung. Die Transportvorrichtung 10 weist eine Schiene 14 auf, die in einer horizontalen Ebene eine umlaufende bzw. in sich geschlossene Transportbahn 16 bildet, wozu diese Schiene 14 von einem mehrteiligen Grundgestell 12 getragen wird. Die Transportbahn 16 weist dabei zwei parallel zueinander verlaufende erste lineare Transportabschnitte 18 auf, welche an ihren beiden Enden jeweils über einen zweiten kreisbogenförmig gekrümmten Transportabschnitt 20 miteinander verbunden sind.

Entlang der ersten Transportabschnitte 18 können entlang der Transportbahn 16 mehrere Bearbeitungs- und/oder Montage-Stationen angeordnet werden (nicht dargestellt), mittels derer Werkstücke bearbeitet und/oder montiert werden können, welche sich auf Schlitten 22 befinden, die entlang der Schiene 14 verfahrbar geführt sind. Der Antrieb der Schlitten 14 erfolgt dabei entlang der beiden ersten Transportabschnitte 18 insbesondere im Bereich der Montage-Stationen mittels Kurventrommeln 24, in deren Antriebsnuten 26 von den einzelnen Schlitten 22 abstehende Mitnehmer (nicht erkennbar) eingreifen, so dass die Schlitten 22 aufgrund einer Drehbewegung der Kurventrommeln 24 entlang der Schiene 14 verfahren werden können. Grundsätzlich können im Bereich der ersten Transportabschnitte 18 aber auch andere Antriebe zum Einsatz kommen, wie beispielweise Linearmotoren und/oder Bandantriebe. Zumindest zur Übergabe bzw. Übernahme der einzelnen Schlitten 22 an bzw. von den zweiten kreisbogenförmig gekrümmten Transportabschnitt 20 weisen die beiden ersten Transportabschnitte 18 am Anfang bzw. am Ende jedoch jeweils eine Antriebseinheit auf, insbesondere jeweils einen Bandantrieb, mittels derer die einzelnen Schlitten 22 über Kraft- bzw. Reibschluss angetrieben werden, wie dies nachfolgend genauer erläutert wird.

Um die Schlitten 22 von dem in der Fig. 1 vorderen ersten Transportabschnitt 18 zu dem hinteren ersten Transportabschnitt 18 transportieren bzw. überführen zu können, sind die beiden Transportabschnitte 18 bzw. deren Schienenabschnitte über ein halbkreisförmig gekrümmtes Schienenstück 15 miteinander verbunden. Dieses halbkreisförmig gekrümmte Schienenstück 15 definiert hierbei den zweiten Transportabschnitt der Transportbahn 16, siehe hierzu auch die Fig. 2.

Wie der Fig. 2 ferner entnommen werden kann, erfolgt der Antrieb der Schlitten 22 am Anfang bzw. am Ende der linearen ersten Transportabschnitte 18 jeweils über ein erstes Antriebsmittel in Form eines Bandantriebs 32 mit einem umlaufenden Gurt, Riemen oder Band 34 als Antriebsmittel. Bei dem Band 34 kann es sich dabei beispielsweise um einen innenverzahnten Zahnriemen handeln, der über mehrere Umlenkrollen 36 umgelenkt wird, um eine ebene Eingriffsoberfläche 38 zu bilden, die in einem gewissen Abstand parallel zu der Schiene 14 verläuft. Ein an dem jeweiligen Schlitten 22 vorgesehenes Kopplungselement 40 kann somit mit der von dem Band 34 gebildeten Eingriffsoberfläche 38 über Kraft- bzw. Reibschluss in Eingriff gelangen, so dass der Schlitten 22 mittels des Bandantriebs 32 an der Schiene 14 am Anfang bzw. am Ende der ersten Transportabschnitte 18 verfahren werden kann.

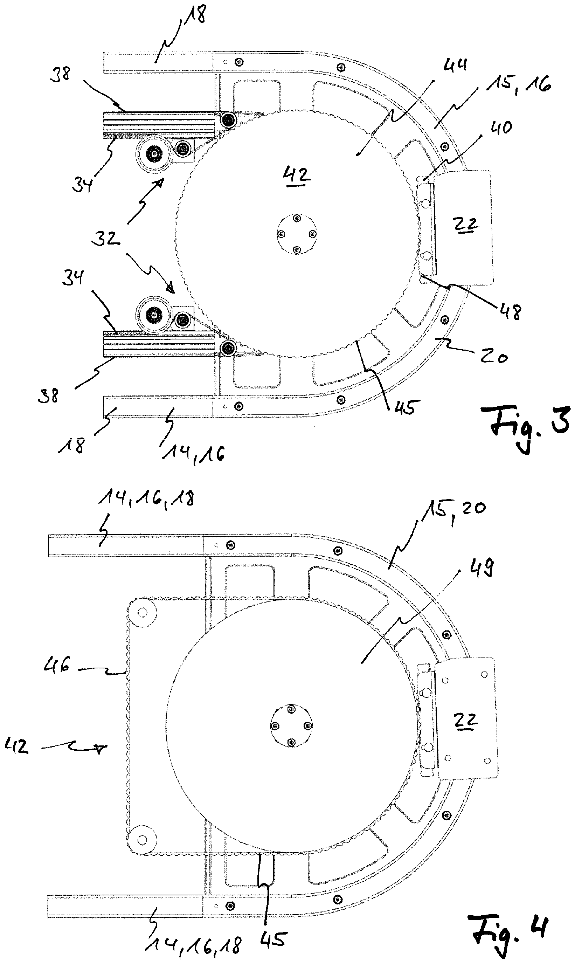

Im Bereich des zweiten Transportabschnitts 20 erfolgt der Antrieb des Schlittens 22 über eine zweite Antriebseinheit 42 in Form eines Zahnantriebs, dessen Antriebmittel bei der Ausführungsform gemäß den Figuren 2 und 3 durch ein Zahnrad 44 gebildet wird, wobei die Rotationsachse des Zahnrads 44 mit dem Mittelpunkt des kreisbogenförmig gekrümmten Schienenstücks 15 zusammenfällt. Die Eingriffsoberfläche in Form der Verzahnung 45 des Zahnrads 44 folgt dabei dem Schienenstücks 15 in einem gewissen äquidistanten Abstand. Vorzugsweise weist dabei das Zahnrad 44 ein Zahnwellenprofil und insbesondere ein Zahnwellenprofil des Typs AT5 auf, um formschlüssig mit dem Kopplungselement 40 des jeweiligen Schlittens 22 in Eingriff gelangen zu können. Hierzu weist das Kopplungselement 40 eine Eingriffsfläche 48 auf, welche ein zu dem Zahnwellenprofil des Zahnrads 44 komplementäres Zahnwellenprofil ausbildet. Auf diese Weise lässt sich über das Kopplungselement 40 des Schlittens 22, über das im Bereich der ersten Transportabschnitte 18 eine kraftschlüssige Verbindung mit dem Bandantrieb 32 erzielt wird, im Bereich des zweiten Transportabschnitts 20 ein Formschluss oder ein kombinierten Kraft-Formschluss erzielen, wodurch einerseits eine exakte Positionierung im Bereich der Eckumlenkung erzielt werden kann. Andererseits ermöglicht ein auf diese Weise erzielter Form- bzw. kombinierter Kraft-Formschluss zwischen dem Kopplungselement 40 und der Antriebseinheit 42 im Bereich der Eckumlenkung, dass die gesamte Transportbahn 16 derart vertikal ausgerichtet werden kann, dass die beiden linear verlaufenden ersten Transportabschnitte 18 vertikal übereinander zu liegen kommen. So kann es aufgrund des Formschlusses nicht zu einem unerwünschten Schlupf zwischen dem Kopplungselement 40 und dem Zahnantrieb 42 kommen, der ansonsten bei vertikaler Ausrichtung der Transportbahn 16 zu einem Durchsacken der Schlitten 22 im Bereich der Eckumlenkung führen könnte.

Wie der Fig. 2 ferner entnommen werden kann, läuft das Band 34 des Bandantriebs 32 in derselben Ebene um wie das Zahnrad 44 der zweiten Antriebseinheit 42, wobei diese Ebene zu jener Ebene parallel ist, in der sich die Transportbahn 16 erstreckt. Da das Zahnrad 44 und das Band 34 in derselben Ebene umlaufen, erfolgt der Eingriff mit dem Kopplungselement 40 somit jeweils von derselben Seite desselben. Diese Eingriffsfläche 48 des Kopplungselements 40 bildet dabei in der bereits zuvor beschriebenen Weise ein Zahnwellenprofil aus, insbesondere ein Zahnwellenprofil des Typs AT5, das zu dem Zahnwellenprofil des Zahnrads 40 für den Formschlusseingriff mit dem Zahnrad 44 komplementär ist.

Gemäß der in der Fig. 4 dargestellten Ausführungsform kann es sich bei dem Antriebsmittel der zweiten Antriebseinheit 42 alternativ zu einem Zahnrad um einen Zahnriemen 46 handeln, der im Bereich des zweiten Transportabschnitts 20 eine Umlenkung durch eine Kreisscheibe 49 erfährt, über die der Zahnriemen 46 läuft und deren Mittelpunkt mit dem Mittelpunkt des kreisbogenförmig gekrümmten Schienenstücks 15 zusammenfällt. Der Zahnriemen 46 weist dabei ein außenliegendes Zahnwellenprofil als Verzahnung 45 auf, das auch hier wiederum komplementär zu dem Zahnwellenprofil der Eingriffsfläche 48 des Kopplungselements 40 ausgebildet ist, um so in der gewünschten Weise einen Formschluss zwischen dem Kopplungselement 40 und dem Antriebsmittel in Form des Zahnriemens 46 herbeiführen zu können.

Der Vollständigkeit halber sei an dieser Stelle angemerkt, dass in der Fig. 4 der Übersichtlichkeit halber die beiden Bandantriebe 32 im Bereich der ersten Transportabschnitte 18 nicht dargestellt sind. Gleichermaßen ist in der Fig. 4 der Antrieb in Form eines Motors zum Antreiben des Zahnriemens 46 nicht dargestellt.

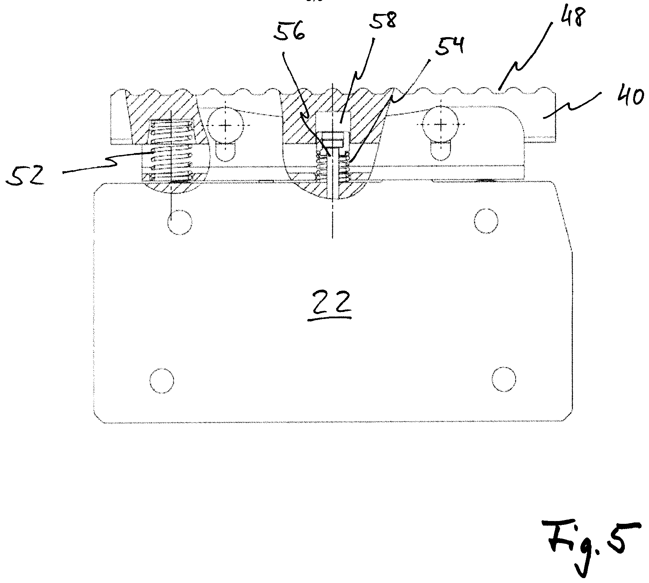

Wie der Fig. 5 entnommen werden kann, ist das Kopplungselement 40 mittels mehrerer Federn 52, 54 an dem Schlitten 22 abgestützt. Insbesondere erfolgt dabei die Abstützung des Kopplungselements 40 an dem Schlitten 22 mittels zweier erster Federn 52 sowie einer zweiten Feder 54, die zwischen den beiden ersten Federn 52 angeordnet ist und vorzugsweise eine größere Federkonstante als die beiden ersten Federn 52 aufweist. Die zweite Feder 54 ist dabei mittels eines Gewindebolzens 56 komprimiert und somit vorgespannt, so dass das Kopplungselement 40 einen Totgang 58 dergestalt aufweist, dass beim Einfedern der ersten Federn 52 die zweite Feder 54 bis zur Überwindung des Totgangs 58 keine Wirkung entfaltet.

Wenn daher gemäß dem Übergang von der Fig. 2 zur Fig. 3 der Schlitten 22 vom Ende des ersten Transportabschnitts 18 an den zweiten Transportabschnitt 20 übergeben wird, führt dies dazu, dass zunächst nur die in Transportrichtung vorne liegende erste Feder 52 einfedert und somit eine Wirkung entfaltet. Erst wenn der Schlitten 22 dann vollständig an den zweiten Transportabschnitt 20 übergeben ist, wird dann auch die zweite Feder 54 aktiv, wozu die Eingriffsoberfläche 38 des Bands 34 einen etwas geringeren Abstand von der Schiene 14 aufweist, als die Außenumfangsoberfläche bzw. die Eingriffsoberfläche des Zahnrads 44.

Dadurch, dass der Antrieb der Schlitten 22 zwischen den Kurventrommeln 24 (siehe Fig. 1) und der Eckumlenkung im Bereich des zweiten Transportabschnitts 20 über einen Bandantrieb 32 erfolgt, kann somit nicht nur eine synchronisierte Übergabe der einzelnen Schlitten 22 an die zweite Antriebseinheit 42 im Bereich des zweiten Transportabschnitts 20 erzielt werden, der auf einen Formschluss zwischen dem Kopplungselement 40 des Schlittens 22 und dem Zahnantrieb 42 beruht; vielmehr dient der Bandantrieb 32 gleichermaßen als eine Art Pufferstrecke, im Bereich derer bei Bedarf einzelne Schlitten 22 temporär "geparkt" werden können, bis sie an die zweite Antriebseinheit 42 übergeben werden können.

Da aufgrund des Formschlusses zwischen dem Kopplungselement 40 und dem Zahnantrieb 42 im Bereich des zweiten Transportabschnitts 20 die Relativposition zwischen Schlitten 22 und Zahnrad 44 bzw. Zahnriemen 46 exakt bestimmt werden kann, lässt sich darüber hinaus im Bereich des zweiten Transportabschnitts 20 ein Taktbetrieb realisieren, so dass auch dort bei Bedarf eine oder mehrere Montage-Stationen aufgestellt werden können.

Letztendlich kann aufgrund des zwischen dem Kopplungselement 40 und dem Zahnradantrieb 42 erzielbaren Formschlusses im Bereich des zweiten Transportabschnitts 20 die gesamte Transportbahn 16 im Unterschied zu der in der Fig. 1 dargestellten Horizontalausrichtung um 90° verkippt angeordnet werden, so dass die beiden linear ausgerichteten ersten Transportabschnitte 18 im Wesentlichen vertikal übereinander zu liegen kommen, ohne dass es im Bereich der Eckumlenkung zu einem schwerkraftbedingten Durchrutschen der einzelnen Schlitten 22 kommen kann.

### Bezugszeichenliste

- 10: Transportvorrichtung
- 12: Grundgestell
- 14: Schiene
- 15: Schienenstück, kreisförmig gebogen
- 16: Transportbahn
- 18: erster Transportabschnitt
- 20: zweiter Transportabschnitt
- 22: Schlitten
- 24: Kurventrommel
- 26: Antriebsnut
- 32: erste Antriebseinheit/Bandantrieb
- 34: Band
- 36: Umlenkrolle
- 38: Eingriffsoberfläche
- 40: Kopplungselement
- 42: zweite Antriebseinheit/Zahnantrieb
- 44: Zahnrad
- 45: Verzahnung
- 46: Zahnriemen
- 48: Eingriffsfläche
- 49: Kreisscheibe
- 52: erste Feder
- 54: zweite Feder
- 56: Gewindebolzen
- 58: Totgang

## Patentansprüche

1. Transportvorrichtung (10) zum Transportieren von Objekten entlang einer Transportbahn (16), umfassend:
- eine Schiene (14), welche die Transportbahn (16) definiert;
- zumindest einen Schlitten (22), der an der Schiene (14) verfahrbar geführt ist und zur Aufnahme wenigstens eines zu transportierenden Objekts ausgebildet ist;
- ein an dem Schlitten (22) vorgesehenes Kopplungselement (40), über das der Schlitten (22) antreibbar ist;
- zumindest eine erste Antriebseinheit (32) mit einem ersten Antriebsmittel (34) zum Antrieb des Schlittens (22) entlang eines ersten Transportabschnitts (18) der Transportbahn (16); und
- eine zweite Antriebseinheit (42) mit einem zweiten Antriebsmittel (44, 46) zum Antrieb des Schlittens (22) entlang eines zweiten Transportabschnitts (20) der Transportbahn (16);
wobei das Kopplungselement (40) ausgebildet ist, um im Bereich des ersten Transportabschnitts (18) kraftschlüssig mit dem ersten Antriebsmittel (34) in Eingriff zu stehen;
wobei das Kopplungselement (40) ferner ausgebildet ist, um im Bereich des zweiten Transportabschnitts (20) formschlüssig oder form- und kraftschlüssig mit dem zweiten Antriebsmittel (44, 46) in Eingriff zu stehen;
**dadurch gekennzeichnet , dass**
das Kopplungselement (40) mittels zumindest einer ersten Feder (52) und mittels zumindest einer zweiten Feder (54) an dem Schlitten (22) abgestützt ist, wobei die zumindest eine erste Feder (52) der zumindest einen zweiten Feder (54) in einer ersten Transportrichtung des Schlittens (22) vorgelagert ist;
wobei das Kopplungselement (40) gegenüber der zumindest einen zweiten Feder (54) einen Totgang (58) aufweist, derart, dass bei einem Einfedern der ersten Feder (52) die zumindest eine zweite Feder (54) bis zur Überwindung des Totgangs (58) keine Wirkung entfaltet.

2. Transportvorrichtung nach Anspruch 1,
**dadurch gekennzeichnet, dass**
die erste Antriebseinheit (32) als ein Bandantrieb mit einem umlaufenden Band (34) als erstem Antriebsmittel (34) ausgebildet ist.

3. Transportvorrichtung nach Anspruch 1 oder 2,
**dadurch gekennzeichnet, dass**
die zweite Antriebseinheit (42) als ein Zahnantrieb mit einem umlaufenden Zahnriemen (46) oder einem Zahnrad (44) als zweitem Antriebsmittel (44, 46) ausgebildet ist.

4. Transportvorrichtung nach zumindest einem der vorstehenden Ansprüche, **dadurch gekennzeichnet, dass**
die Schiene (14) im Bereich des zweiten Transportabschnitts (20) der Transportbahn (16) gekrümmt ist, insbesondere kreisbogenförmig, wobei das zweite Antriebmittel (44, 46) der Schiene (14) folgt.

5. Transportvorrichtung nach Anspruch 3 oder 4,
**dadurch gekennzeichnet, dass**
der Zahnriemen (44) im Bereich des zweiten Transportabschnitts der Transportbahn (16) eine Umlenkung durch eine Kreisscheibe (49) erfährt.

6. Transportvorrichtung nach zumindest einem der vorstehenden Ansprüche, **dadurch gekennzeichnet, dass**
die beiden Antriebsmittel (34, 44, 46) in einer gemeinsamen Ebene umlaufen, die zu einer Ebene parallel ist, in der sich die Transportbahn (16) erstreckt.

7. Transportvorrichtung nach zumindest einem der vorstehenden Ansprüche, **dadurch gekennzeichnet, dass**
das erste Antriebsmittel (34) und das zweite Antriebsmittel (44, 46) so ausgerichtet sind, dass der Eingriff mit dem Kopplungselement (40) jeweils von derselben Seite erfolgt, wozu vorzugsweise das Kopplungselement (40) eine, insbesondere eine einzige, Eingriffsfläche (48) für den Eingriff mit dem ersten Antriebsmittel (34) und dem zweiten Antriebsmittel (44, 46) ausbildet.

8. Transportvorrichtung nach Anspruch 7,
**dadurch gekennzeichnet, dass**
die Eingriffsfläche (48) des Kopplungselement (40) ein Zahnwellenprofil ausbildet, insbesondere ein Zahnwellenprofil des Typs AT5, wobei das zweite Antriebsmittel (44, 46) für den Eingriff mit dem Kopplungselement (40) ein zu dem Zahnwellenprofil des Kopplungselements (40) komplementär ausgebildetes Zahnwellenprofil ausbildet.

9. Transportvorrichtung nach zumindest einem der vorstehenden Ansprüche, **dadurch gekennzeichnet, dass**
das Kopplungselement (40) federnd an dem Schlitten (22) abgestützt ist, wobei insbesondere das Kopplungselement (40) senkrecht zu seiner Eingriffsfläche (48) vorgespannt ist.

10. Transportvorrichtung nach zumindest einem der vorstehenden Ansprüche, **dadurch gekennzeichnet, dass**
zwei erste Federn (52) vorgesehen sind, von denen eine der zumindest einen zweiten Feder (54) in der ersten Fahrtrichtung vor- und die andere der zumindest einen zweiten Feder (54) in der ersten Fahrtrichtung nachgelagert ist.

11. Transportvorrichtung nach Anspruch 10,
**dadurch gekennzeichnet, dass**
die zumindest eine zweite Feder (54) steifer ist als die zumindest eine erste Feder (52).

## Claims

1. A transport device (10) for transporting objects along a transport track (16) comprising:
- a rail (14) which defines the transport track (16);
- at least one slide (22) which is travelably guided at the rail (14) and which is configured to receive at least one object to be transported;
- a coupling element (40) which is provided at the slide (22) and via which the slide (22) can be driven;
- at least one first drive unit (32) having a first drive means (34) for driving the slide (22) along a first transport section (18) of the transport track (16); and
- a second drive unit (42) having a second drive means (44, 46) for driving the slide (22) along a second transport section (20) of the transport track (16),
wherein the coupling element (40) is configured to be in engagement in a force-fitting manner with the first drive means (34) in the region of the first transport section (18);
wherein the coupling element (40) is further configured to be in engagement in a shape-fitting manner or in a shape-fitting and force-fitting manner with the second drive means (44, 46) in the region of the second transport section (20);
**characterized in that**
the coupling element (40) is supported by means of at least one first spring (52) and by means of at least one second spring (54) at the slide (22), with the at least one first spring (52) being seated upstream of the at least one second spring (54) in a first transport direction of the slide (22);
wherein the coupling element (40) has a free travel (58) with respect to the at least one second spring (54) such that on a deflection of the first spring (52), the at least one second spring (54) does not develop any effect until the overcoming of the free travel (58).

2. A transport device according to claim 1,
**characterized in that**
the first drive unit (32) is configured as a belt drive having a revolving belt (34) as the first drive means (34).

3. A transport device according to claim 1 or 2,
**characterized in that**
the second drive unit (42) is configured as a toothed drive having a revolving toothed belt (46) or a toothed wheel (44) as the second drive means (44, 46).

4. A transport device according to at least one of the preceding claims, **characterized in that**
the rail (14) is curved, in particular arcuately, in the region of the second transport section (20) of the transport track (16), with the second drive means (44, 46) following the rail (14).

5. A transport device according to claim 3 or 4,
**characterized in that**
the toothed belt (44) undergoes a deflection by a circular disk (49) in the region of the second transport section of the transport track (16).

6. A transport device according to at least one of the preceding claims, **characterized in that**
the two drive means (34, 44, 46) revolve in a common plane that is in parallel with a plane in which the transport track (16) extends.

7. A transport device according to at least one of the preceding claims, **characterized in that**
the first drive means (34) and the second drive means (44, 46) are oriented such that the engagement with the coupling element (40) takes place from the same side in each case, for which purpose the coupling element (40) preferably has an engagement surface, in particular a single engagement surface (48), for the engagement with the first drive means (34) and the second drive means (44, 46).

8. A transport device according to claim 7,
**characterized in that**
the engagement surface (48) of the coupling element (40) forms a splined shaft profile, in particular a splined shaft profile of the AT5 type, with the second drive means (44, 46) forming a splined shaft profile formed in a complementary manner to the splined shaft profile of the coupling element (40) for the engagement with the coupling element (40).

9. A transport device according to at least one of the preceding claims, **characterized in that**
the coupling element (40) is resiliently supported at the slide (22), with the coupling element (40) in particular being preloaded perpendicular to its engagement surface (48).

10. A transport device according to at least one of the preceding claims, **characterized in that**
two first springs (52) are provided of which one is seated upstream of the at least one second spring (54) in the first travel direction and the other is seated downstream of the at least one second spring (54) in the first travel direction.

11. A transport device according to claim 10,
**characterized in that**
the at least one second spring (54) is stiffer than the at least one first spring (52).

## Revendications

1. Dispositif de transport (10) destiné à transporter des objets le long d'une voie de transport (16), comprenant :
- un rail (14) qui définit la voie de transport (16) ;
- au moins un chariot (22) qui est guidé de manière déplaçable sur le rail (14) et qui est conçu pour recevoir au moins un objet à transporter ;
- un élément de couplage (40) prévu sur le chariot (22) et permettant d'entraîner le chariot (22) ;
- au moins une première unité d'entraînement (32) ayant un premier moyen d'entraînement (34) pour entraîner le chariot (22) le long d'une première section de transport (18) de la voie de transport (16) ; et
- une deuxième unité d'entraînement (42) ayant un deuxième moyen d'entraînement (44, 46) pour entraîner le chariot (22) le long d'une deuxième section de transport (20) de la voie de transport (16) ;
l'élément de couplage (40) étant conçu pour être en prise par complémentarité de force avec le premier moyen d'entraînement (34) dans la zone de la première section de transport (18) ;
l'élément de couplage (40) étant en outre conçu pour être en prise par complémentarité de forme ou par complémentarité de forme et de force avec le deuxième moyen d'entraînement (44, 46) dans la zone de la deuxième section de transport (20),
**caractérisé en ce que**
l'élément de couplage (40) est supporté sur le chariot (22) au moyen d'au moins un premier ressort (52) et au moyen d'au moins un deuxième ressort (54), ledit au moins un premier ressort (52) étant prévu en amont dudit au moins un deuxième ressort (54) dans une première direction de transport du chariot (22) ;
l'élément de couplage (40) présentant un point mort (58) par rapport audit au moins un deuxième ressort (54) de telle sorte que, lors d'une compression du premier ressort (52), ledit au moins un deuxième ressort (54) ne déploie aucun effet jusqu'à ce que le point mort (58) soit surmonté.

2. Dispositif de transport selon la revendication 1,
**caractérisé en ce que**
la première unité d'entraînement (32) est conçue comme un entraînement à bande ayant une bande en circulation (34) comme premier moyen d'entraînement (34).

3. Dispositif de transport selon la revendication 1 ou 2,
**caractérisé en ce que**
la deuxième unité d'entraînement (42) est conçue comme un entraînement à dents ayant une courroie dentée (46) en circulation ou une roue dentée (44) comme deuxième moyen d'entraînement (44, 46).

4. Dispositif de transport selon l'une au moins des revendications précédentes,
**caractérisé en ce que**
le rail (14) est incurvé, en particulier en arc de cercle, dans la zone de la deuxième section de transport (20) de la voie de transport (16), le deuxième moyen d'entraînement (44, 46) suivant le rail (14).

5. Dispositif de transport selon la revendication 3 ou 4,
**caractérisé en ce que**
la courroie dentée (44) subit une déviation par une poulie circulaire (49) dans la zone de la deuxième section de transport de la voie de transport (16).

6. Dispositif de transport selon l'une au moins des revendications précédentes,
**caractérisé en ce que**
les deux moyens d'entraînement (34, 44, 46) circulent dans un plan commun parallèle à un plan dans lequel s'étend la voie de transport (16).

7. Dispositif de transport selon l'une au moins des revendications précédentes,
**caractérisé en ce que**
le premier moyen d'entraînement (34) et le deuxième moyen d'entraînement (44, 46) sont orientés de telle sorte que l'engagement avec l'élément de couplage (40) s'effectue respectivement du même côté, l'élément de couplage (40) formant à cet effet de préférence une surface d'engagement (48), en particulier unique, pour l'engagement avec le premier moyen d'entraînement (34) et avec le deuxième moyen d'entraînement (44, 46).

8. Dispositif de transport selon la revendication 7,
**caractérisé en ce que**
la surface d'engagement (48) de l'élément de couplage (40) forme un profil de cannelure, en particulier un profil de cannelure de type AT5, et, pour l'engagement avec l'élément de couplage (40), le deuxième moyen d'entraînement (44, 46) forme un profil de cannelure complémentaire au profil de cannelure de l'élément de couplage (40).

9. Dispositif de transport selon l'une au moins des revendications précédentes,
**caractérisé en ce que**
l'élément de couplage (40) s'appuie de manière élastique sur le chariot (22), en particulier, l'élément de couplage (40) étant précontraint perpendiculairement à sa surface d'engagement (48).

10. Dispositif de transport selon l'une au moins des revendications précédentes,
**caractérisé en ce que**
il est prévu deux premiers ressorts (52) dont l'un est placé en amont dudit au moins un deuxième ressort (54) dans la première direction de déplacement et l'autre est placé en aval dudit au moins un deuxième ressort (54) dans la première direction de déplacement.

11. Dispositif de transport selon la revendication 10,
**caractérisé en ce que**
ledit au moins un deuxième ressort (54) est plus rigide que ledit au moins un premier ressort (52).
